# EUROPÄISCHE PATENTSCHRIFT

(11) **EP 3 325 290 B1**
(45) Veröffentlichungstag und Bekanntmachung des Hinweises auf die Patenterteilung: **09.10.2019**
(21) Anmeldenummer: 16757227.0
(22) Anmeldetag: 24.08.2016
(51) Int. Cl.: B60C 23/04, B60C 23/10

(54) **VERFAHREN ZUR ANSTEUERUNG EINES BETRIEBSMODUS BEI EINER REIFENDRUCKKONTROLLVORRICHTUNG**
METHOD FOR CONTROLLING OPERATING MODES OF A TIRE PRESSURE MONITORING SYSTEM
METHODE DE COMMANDE DE MODES OPERATOIRES D' UN SYSTEME DE SURVEILLANCE DE PRESSIONS DE PNEUMATIQUES

(30) Priorität: 21.09.2015 DE 102015115917
(43) Veröffentlichungstag der Anmeldung: 30.05.2018
(73) Patentinhaber: Huf Baolong Electronics Bretten GmbH, 75015 Bretten (DE)
(72) Erfinder: WAGNER, Markus, 71638 Ludwigsburg (DE); OTT, Heinrich, 71701 Schwieberdingen (DE)
(74) Vertreter: Zenz Patentanwälte Partnerschaft mbB
(86) Internationale Anmeldenummer: PCT/EP2016/069995
(87) Internationale Veröffentlichungsnummer: WO 2017/050513

(56) Entgegenhaltungen:
- WO-A2-02/07993
- WO-A2-92/14620
- US-A1- 2011 148 617

## Beschreibung

Die Erfindung betrifft ein Verfahren zur Auswahl und Umschaltung zwischen Betriebsmodi von Reifendruckkontrollvorrichtungen. Reifendruckkontrollvorrichtungen sind Bestandteil von Reifendrucküberwachungssystemen (Tire Pressure Monitoring Systems-TPMS). Die Reifendruckkontrollvorrichtungen werden teilweise auch als Radmodule bezeichnet und an einem Rad des zu überwachenden Fahrzeuges befestigt. Die Befestigung kann in dem Fahrzeugreifen auf der Innenseite der Lauffläche oder im Bereich der Felge erfolgen.

Derartige Reifendruckkontrollvorrichtungen überwachen den Reifendruck und senden in zeitlichen Abständen Druckmesswerte an eine zentrale Fahrzeugeinheit, die einen vom Reifen beabstandeten Bestandteil des Reifendruckkontrollsystems bildet. Für entsprechende Reifendruckkontrollvorrichtungen gibt es am Markt verfügbare technische Module und Baugruppen, welche bereits die Druckmesskomponenten, Steuerkomponenten in Gestalt von Mikrocontrollern, Niederfrequenzempfänger und Hochfrequenzsender aufweisen. Auch Temperatursensoren und Speicherbausteine sind vorhanden. Ein Beispiel derartiger Baugruppen die in Reifendruckkontrollvorrichtungen einsetzbar sind, sind zum Beispiel die Produkte des Unternehmens Infineon mit der Modellbezeichnung SP 40.

Reifendruckkontrollvorrichtungen können auch Bewegungssensoren aufweisen, beispielsweise in Gestalt von Beschleunigungssensoren. Die Signale dieser Bewegungssensoren können zur Bestimmung von Sendezeitpunkten der Druckmessdaten verwendet werden und die Reifendruckkontrollvorrichtungen können auch in Abhängigkeit von den Bewegungszuständen in unterschiedliche Betriebsmodi schalten.

Es ist insbesondere bekannt, dass Reifendruckkontrollvorrichtungen in einen energiesparenden Zustand versetzt werden können, wenn das Fahrzeug abgestellt wird. In einem solchen Zustand werden die Reifendrücke nur in größeren Zeitabständen erfasst und eine Aussendung an die zentrale Fahrzeugeinheit erfolgt gar nicht oder selten. Demgegenüber werden im Fahrzustand des Fahrzeuges, insbesondere bei Fahrtantritt, die Reifendrücke häufiger erfasst und gesendet. Außerdem ist es dem Stand der Technik bekannt, auch in Abhängigkeit von raschen Druckänderungen die Betriebszustände zu ändern. Beispielsweise ist ein Übergang in einen sogenannten Delta-P-Modus bekannt, der durch eine an der Reifendruckkontrollvorrichtung erfasste rasche Druckänderung ausgelöst wird. Diese Änderung des Betriebsmodus gilt sowohl bei raschen Druckerhöhungen als auch bei raschen Druckverringerungen.

In einem solchen Delta-P-Modus, also nach Detektion einer raschen Druckverringerung oder Druckerhöhung, werden die Druckwerte in besonders schneller Folge erfasst und an die zentrale Fahrzeugeinheit gesendet. Dies erlaubt zum Beispiel die fahrzeugseitige Überwachung bei einem raschen Druckverlust durch Beschädigung des Reifens, insbesondere jedoch auch bei der Befüllung der Fahrzeugreifen zum Erreichen eines gewünschten Betriebsdrucks. Beispielsweise ist es bekannt, am Fahrzeug eine Befüllhilfe vorzusehen, die beispielsweise ein Signal ausgibt, wenn ein Reifen am Fahrzeug einen vorgegebenen Druckwert erreicht. Dafür ist jedoch erforderlich, dass die Reifendruckkontrollvorrichtung von sich aus in den raschen Überwachungsmodus mit einer hochfrequenten Erfassung der Reifendrücke und Übermittlung an das Fahrzeug schaltet. Nur dann kann der Reifendruck während des Befüllvorgangs mit angemessener Zeitauflösung überwacht werden.

Auch wenn eine solche hochfrequente Überwachung des Reifendruckes bei Bedarf vorteilhaft ist, nämlich wenn tatsächlich rasche Druckänderungen erfolgen, erfordert sie einen hohen Energieeinsatz. Da Reifendrucksensoren aber meist nur zusammen mit Fahrzeugreifen gewechselt werden, sollte die Betriebsdauer einer Reifendruckkontrollvorrichtung einige Jahre, möglichst zehn Jahre betragen. Mit der im Fahrzeugbau einhergehenden Gewichtsverringerung und Verkleinerung der Systeme werden jedoch zunehmend Reifendruckkontrollvorrichtungen mit reduzierten Energiespeichern ausgestattet. Beispielsweise ist es inzwischen durchaus üblich, Reifendruckkontrollvorrichtungen mit Knopfzellen mit Kapazitäten im Bereich von 200 mAh auszustatten.

Das Dokument WO 92/14620 (A2) offenbart ein Reifendruckkontrollsystem, bei dem eine Abtastfrequenz veränderlich ist, so dass verschiedene Betriebsmodi mit unterschiedlichen Abtastfrequenzen für die Druckermittlung ansteuerbar sind.

Aus der WO 02/07993 (A2) ist ein Reifendruckkontrollsystem bekannt, welches periodisch in ersten Zeitabständen Druckwerte eines Reifens erfasst und speichert. In periodischen zweiten Zeitabständen wird ein Microcontroller des Systems aufgeweckt, um zu prüfen, ob drahtlose Abfragesignale eingehen und ggf. gespeicherte Druckwerte als Antwortsignal zu senden.

Die US 2011/148617 (A1) offenbart ein Reifendruckkontrollsystem, welches Druckwerte eines Reifens unmittelbar nach Fahrtantritt erfasst und mit Werten während der Fahrt oder nach Fahrtabschluss vergleicht, um einen fehlerbedingten Druckabfall zu erkennen.

Bei Systemen gemäß dem Stand der Technik wird für solch reduzierte Energieversorgungen zu häufig (und unnötig) in einen Betriebsmodus geschaltet, in dem mit hoher Frequenz Werte erfasst und gesendet werden. Um dem Benutzer nämlich erhöhten Komfort zu bieten, wird regelmäßig bereits in einem solchen Delta-P-Modus geschaltet, wenn eine Druckänderung von mehr als 100 mbar erfolgt. Eine solche Druckänderung tritt jedoch auch im alltäglichen Nutzungsbetrieb auf, beispielsweise beim Abkühlen eines Reifens nach Abstellen des Fahrzeuges (z.B. mit Druckveränderungen im Bereich 100 mbar bis 200 mbar). Auch wenn also gar keine Befüllung eines Reifens oder eine sonstige massive Druckveränderung vorliegt, wird allein durch die Abkühlung des Reifens in den energieintensiven Modus geschaltet.

Aufgabe der Erfindung ist es, den Energiebedarf einer Reifendruckkontrollvorrichtung zu verbessern.

Diese Aufgabe wird durch ein Verfahren mit den Merkmalen des Patentanspruchs 1 gelöst.

Das erfindungsgemäße Verfahren zur Ansteuerung eines Betriebsmodus einer Reifendruckkontrollvorrichtung ist mit herkömmlichen Reifendruckkontrollvorrichtungen einsetzbar. Derartige herkömmliche Reifendruckkontrollvorrichtungen weisen Druckmesseinrichtungen, eine Sendeeinrichtung zur Funk-Übermittlung von Druckmessdaten an eine Zentraleinheit am Fahrzeug, Speichermittel für Druckdaten und Vergleichsmittel für Vergleiche von Druckwerten sowie einen Bewegungssensor auf.

Entsprechende Reifendruckkontrollvorrichtungen zum Einsatz des erfindungsgemäßen Verfahrens können wenigstens zwei Betriebsmodi einnehmen, wobei regelmäßig auch mehr Betriebsmodi vorhanden sein können. In einem ersten Betriebsmodus der Reifendruckkontrollvorrichtung wird der Reifendruck wiederholt in ersten Zeitabständen gemessen. In diesem Betriebsmodus erfolgt die Messung zu dem Zweck, Veränderungen des Reifendrucks zu erfassen, die Übermittlung an eine fahrzeugseitige Empfangseinrichtung ist jedoch nicht unbedingt vorgesehen, jedenfalls nicht zwingend erforderlich. Dieser erste Betriebsmodus ist als energiesparend anzusehen.

In einem zweiten Betriebsmodus wird der Reifendruck in zweiten Zeitabständen gemessen, wobei diese zweiten Zeitabstände kürzer sind als die ersten Zeitabstände. Im zweiten Betriebsmodus wird also häufiger der Reifendruck erfasst als im ersten Betriebsmodus. Außerdem werden im zweiten Betriebsmodus Druckmessdaten in dritten Zeitabständen von der Reifendruckkontrollvorrichtung ausgesendet. Der zweite Betriebsmodus bezeichnet also den energieintensiveren Betriebsmodus, in dem in jedem Fall eine häufigere Erfassung und auch eine Übermittlung der Druckmessdaten erfolgt. Die Übermittlung kann nach jeder Druckerfassung erfolgen (die dritten Zeitabstände sind gleich den zweiten Zeitabständen), es ist jedoch auch möglich, die Reifendrücke in größeren Zeitabständen erfolgen zu lassen als die Messungen (die dritten Zeitabstände sind größer als die zweiten Zeitabstände).

In den oben genannten Beispielen würde der zweite Betriebsmodus also dem sogenannten Delta-P-Modus entsprechen, welcher eingenommen wird, wenn eine rasche Druckänderung überwacht werden soll. Aus dem ersten Betriebsmodus in den zweiten Betriebsmodus wird dann gewechselt, wenn ein gemessener Druck von einem gespeicherten Referenzwert um mehr als einen ersten Schwellwert abweicht. Wird also in dem ersten Betriebsmodus, in welchem die Reifendrücke gemessen, jedoch nicht unbedingt übermittelt werden, eine Druckänderung erfasst die einen raschen Druckabfall oder Druckanstieg charakterisiert, so wird in den zweiten Betriebsmodus mit höherer Messfrequenz und mit Messwertübermittlung an die zentrale Fahrzeugeinheit gewechselt. Was unter einer raschen Druckänderung zu verstehen ist, ist durch den gespeicherten Referenzwert und den ersten Schwellwert gekennzeichnet.

Erfindungsgemäß wird zur Verhinderung einer unnötigen Umschaltung in den energieintensiven zweiten Betriebsmodus beim Eintritt in den ersten, energiereduzierten Betriebsmodus der zuletzt abgesendete Druckwert als erster Referenzwert in den Speichermitteln der Reifendruckkontrollvorrichtung gespeichert. Wird also beispielsweise ein Fahrzeug aus dem Fahrbetrieb abgestellt, wird der zuletzt an die zentrale Fahrzeugeinheit übermittelte Druckwert als ersten Referenzwert gespeichert. Wie vorstehend beschrieben, werden im ersten Betriebsmodus die Druckmesswerte weiterhin mit ersten Zeitabständen erfasst (zum Beispiel alle fünf Sekunden oder alle dreißig Sekunden), diese Druckwerte werden jedoch gar nicht oder nur selten an die Fahrzeugeinheit übermittelt.

Erfindungsgemäß wird außerdem mit dem Eintritt im ersten Betriebsmodus ein Timer in der Reifendruckkontrollvorrichtung gestartet, der ein Zeitintervall bis zu einer ersten vorgegebenen Abklingdauer überwacht. Nach Ablauf der vorgegebenen ersten Abklingdauer wird der zuletzt gemessene Druckwert als neuer erster Referenzwert gespeichert.

Gemäß der Erfindung wird also in Abhängigkeit von dem Ablauf eines Timers der erste Referenzwert, der für einen Vergleich zum Erkennen einer raschen Druckveränderung herangezogen wird, nach Timerablauf auf den aktuellen Druckmesswert neu festgesetzt (aktualisiert). Im Beispiel eines Abkühlens des Reifens nach Abstellen eines Fahrzeuges erreicht man so, dass zwar eine empfindliche Schwellwertgrenze beibehalten werden kann, um eine Druckveränderung festzustellen, während der eher langsamen Abkühlung jedoch der Referenzwert an die veränderten Druckverhältnisse angepasst wird. Wird beispielsweise durch die Erwärmung im Fahrbetrieb eine Druckerhöhung von 200 mbar hervorgerufen, so würde ein vollständiges Abkühlen des Reifens eine Druckabsenkung von 200 mbar hervorrufen. Beträgt beispielsweise der erste Schwellwert 100 mbar, würde im Verlauf der Abkühlung aus dem ersten Betriebsmodus in den zweiten Betriebsmodus gewechselt, da dies als signifikante Druckänderung erkannt würde. Wenn nach Ablauf des Timers jedoch der Referenzwert nachgeführt wird, indem er auf den letzten Druckmesswert gesetzt wird, kann die Sensitivität gegenüber raschen Änderungen beibehalten werden, ein unnötiger Wechsel in den zweiten Betriebsmodus wird jedoch vermieden. Der erste Referenzwert wird nach Timerablauf auf den dann aktuellen Druckwert heruntergestuft.

Wesentlich ist, dass der Referenzwert den Druckmesswerten in zeitlichem Abstand nachgeführt wird, wobei der Timer mit seiner ersten Abklingdauer so zu wählen ist, dass bei dem Auftreten der üblichen Ereignisse, wie beispielsweise dem Abstellen eines Fahrzeuges, der Wechsel in den zweiten Betriebsmodus verhindert wird. Beispielsweise kann davon ausgegangen werden, dass ein Fahrzeugreifen bei einem üblichen Abkühlvorgang um weniger als 100 mbar Druck in fünf bis zehn Minuten abbaut. Die erste Abklingdauer kann dann zum Beispiel auf fünf oder zehn Minuten festgelegt werden, so dass nach Ablauf dieser ersten Abklingdauer der Referenzwert neu gesetzt wird. Wird allerdings innerhalb dieser ersten Abklingdauer beispielsweise ein Befüllvorgang am Reifen gestartet, wird in der vorgesehenen Weise in den zweiten Betriebsmodus gewechselt. Ist der Referenzwert nach der ersten Abklingdauer neu gesetzt, so ist auch dann ausreichend Sensitivität für den Wechsel in den zweiten Betriebsmodus beim Start eines Befüllvorgangs vorhanden. Allerdings ist durch die Nachführung des Referenzwertes auf den aktuellen Messwert ein Wechsel in den zweiten Betriebsmodus durch den Abkühlvorgang unterbunden.

Das Nachführen durch Timer und Aktualisierung auf einen gerade gemessenen Druckwert ist äußerst energiesparend. Grundsätzlich könnte zwar über die Erfassung einer Temperatur mit einem vorhandenen Temperatursensor eine Temperaturkompensation der Druckwerte vorgenommen werden, dies erfordert jedoch häufige, energieintensive Rechenoperationen (ggf. 32bit Arithmetik). Ähnliches gilt für die Nachführung eines gleitenden Mittelwertes oder gleitenden, gewichteten Mittelwertes. Die erfindungsgemäße Gestaltung ist aufgrund der einfachen Vergleichsoperationen und geringen Anforderungen an Berechnungen diesen Alternativen bezüglich des Energiebedarfs deutlich überlegen.

Wie oben ausgeführt, kann in dem ersten Betriebsmodus vorgesehen sein, die Druckmessdaten in gewissen Zeitabständen auszusenden, wobei jedoch die Zeitabstände deutlich größer sind als im zweiten Betriebsmodus. Es ist jedoch bevorzugt, wenn in dem ersten Betriebsmodus keine Druckmessdaten von der Reifendruckkontrollvorrichtung ausgesendet werden. In diesem Fall beschränkt sich die Reifendruckkontrollvorrichtung ausschließlich auf die Messung der Druckmessdaten und eine Differenzbildung der gemessenen Daten mit dem Referenzwert und dem Vergleich der Abweichung dieser Werte mit einem ersten Schwellwert. Die Reifendruckkontrollvorrichtung ist in dem ersten Betriebsmodus dann in einem reinen Überwachungsmodus ohne über Reifendrücke zu informieren. Dieser Betriebszustand ist energetisch erheblich begünstigt gegenüber dem zeitweisen Aussenden der Druckmesswerte.

In einer besonders bevorzugten Gestaltung des erfindungsgemäßen Verfahrens ist in der Reifendruckkontrollvorrichtung ein zweiter Referenzwert gespeichert, wobei in den zweiten Betriebsmodus auch dann gewechselt wird, wenn ein gemessener Druck von dem zweiten Referenzwert um mehr als einen zweiten Schwellwert abweicht.

Gemäß dieser Ausführungsform wird der zweite Referenzwert benutzt, um ein Alternativkriterium für einen Wechsel in den zweiten Betriebsmodus bereitzustellen. Der zweite Referenzwert wird im Gegensatz zu dem ersten Referenzwert nicht aktualisiert/nachgeführt, sondern bleibt unabhängig vom Ablauf des Timers erhalten. Auf diese Weise kann beispielsweise eine Höchstgrenze festgesetzt werden, die eine maximale Druckänderung im üblichen Betrieb darstellt. Wird beispielsweise festgestellt, dass der aktuelle Druckmesswert von dem zweiten Referenzwert um mehr als 350 mbar abweicht, kann dies nicht auf übliche Vorgänge, wie z.B. übliche Erwärmung oder Abkühlung des Reifens zurückgeführt werden. Es liegt dann beispielsweise ein Druckverlust durch Schädigung des Reifens oder ein Überdruck aus ungewöhnlichen Gründen vor. In diesem Fall wird in den zweiten Betriebsmodus gewechselt, unabhängig von den Vergleichen des ersten Referenzwertes mit den Messwerten.

Es ist dabei besonders vorteilhaft, wenn bei Eintritt in den ersten Betriebsmodus der zuletzt abgesendete Druckwert als zweiter Referenzwert in den Speichermitteln der Reifendruckkontrollvorrichtung gespeichert wird.

In dieser Ausführungsform werden sowohl der erste als auch zweite Referenzwert auf den zuletzt abgesendeten Druckwert gesetzt. Während des Betriebs im ersten Betriebszustand und nach Ablauf des Timers, wird zwar der erste Referenzwert auf den dann aktuell gemessenen Druckmesswert aktualisiert, der zweite Referenzwert verbleibt jedoch auf seinem ursprünglichen Wert. Erster und zweiter Referenzwert fallen also nach Ablauf des Timers auseinander. Auf diese Weise können unübliche Druckänderungen jederzeit durch Vergleich des zweiten Referenzwertes mit den aktuellen Druckmesswerten erkannt werden, während die üblichen Vorgänge durch Nachführen des ersten Referenzwertes abgefangen werden. Es ist vorteilhafterweise so, dass der zweite Schwellwert zum Vergleich der Abweichungen der aktuellen Messwerte vom zweiten Referenzwert größer ist als der erste Schwellwert, der für den Vergleich der aktuellen Messwerte mit dem ersten Referenzwert herangezogen wird. Der erste Referenzwert wird also innerhalb der Grenzen nachgeführt, die durch den zweiten Referenzwert und dem zweiten Schwellwert gesetzt werden. Brechen die aktuellen Messwerte aus den Grenzen des zweiten Referenzwertes mit dem zweiten Schwellwert aus, so wird in jedem Fall in dem zweiten Betriebsmodus mit erhöhter Erfassungsfrequenz und Sendung der Messdaten gewechselt. Erfolgt jedoch eine Druckveränderung innerhalb dieser Grenzen, so gewährleistet die Nachführung des ersten Referenzwertes innerhalb dieser Grenzen die Verhinderung eines unnötigen Wechsels in den zweiten Betriebsmodus.

In einer Weiterbildung der Erfindung wird der Timer nach Ablauf der ersten Abklingdauer erneut gestartet.

Bei Vorgängen, die länger als die erste Abklingdauer in Anspruch nehmen, kann der Timer nach Ablauf der ersten Abklingdauer erneut gestartet werden. Der Timer kann dann mit identischer Abklingdauer erneut gestartet werden oder mit einer kürzeren oder längeren Abklingdauer. Wesentlich ist, dass der Vorgang des Nachführens des ersten Referenzwertes wiederholt wird. Eine solche Wiederholung kann einmal oder mehrmals erfolgen.

Je nach den erwarteten Vorgängen kann die erste Abklingdauer wenigstens eine Minute betragen, vorzugsweise beträgt sie jedoch wenigstens fünf Minuten. Der erste Schwellwert beträgt bevorzugt wenigstens 50 mbar, um zu häufige Wechsel in den zweiten Modus auch innerhalb der ersten Abklingdauer zu verhindern, vorzugsweise beträgt er wenigstens 100 mbar. Weiterhin beträgt der zweite Schwellwert wenigstens 200 mbar, bevorzugt jedoch wenigstens 350 mbar. Wird ein solcher Schwellwert als Abweichung zwischen Referenzwert und Messwert überschritten (durch Druckanstieg oder durch Druckabfall) so liegt üblicherweise ein außergewöhnliches Ereignis vor, was unbedingt einen Wechsel in den zweiten Modus erfordert.

In einer bevorzugten Gestaltung der Erfindung wir in Abhängigkeit von den Signalen des Bewegungssensors in den ersten Betriebsmodus gewechselt. Die Reifendruckkontrollvorrichtung erfasst anhand der Daten des Bewegungssensors den Fahrzustand des Fahrzeuges. Wird das Fahrzeug abgestellt und bewegen sich die Räder des Fahrzeuges nicht länger, wird in den ersten Betriebsmodus gewechselt, wobei eine Vorlaufdauer eingehalten werden kann. Beim Wechsel in den ersten Betriebsmodus werden die vorstehend beschriebenen Schritte der Setzung von Referenzwerten und der Start des Timers veranlasst. Bei einem Wechsel in einen Betriebsmodus im Fahrzustand verhindern die kürzeren Sendeintervalle einen unnötigen Übergang in den Betriebsmodus 2. Zwar kann das hier beschriebene erfindungsgemäße Verfahren auch dann angewandt werden, es wird jedoch keine dann nur geringe oder gar keine vorteilhafte Wirkung entfalten.

Die Erfindung wird nun anhand der beiliegenden Zeichnung näher erläutert.

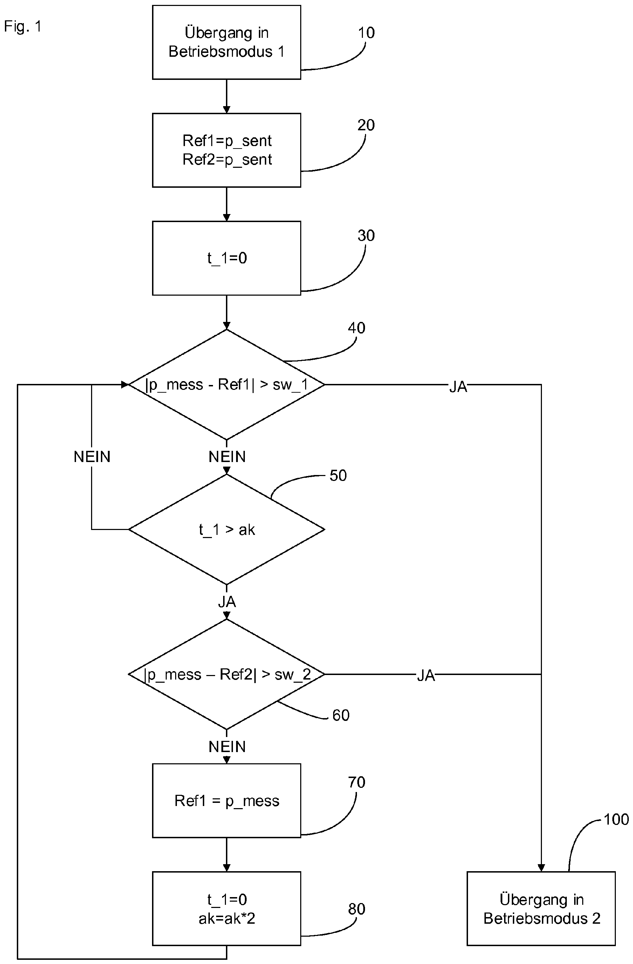

Figur 1 zeigt ein Ablaufdiagramm einer Ausführungsform des erfindungsgemäßen Verfahrens.

In Figur 1 ist ein Ablaufdiagramm einer möglichen Ausführungsform des erfindungsgemäßen Verfahrens dargestellt.

Verfahrensschritt 10 zeigt den Übergang in den ersten Betriebsmodus. In dem ersten Betriebsmodus wird der Reifendruck zwar in regelmäßigen Abständen gemessen, es erfolgt jedoch keine Aussendung des Reifendrucks. Es handelt sich entsprechend um einen energiereduzierten Modus, da die Erfassung ohne Sendung des Reifendrucks wenig Energie erfordert. Dennoch ist die Reifendruckkontrollvorrichtung in einem Bereitschaftszustand, um bei Bedarf und signifikanten Druckänderungen in den zweiten Betriebsmodus zu wechselnd. In dem ersten Betriebsmodus ist die Messfrequenz auf eine energiesparende Frequenz gesetzt. In dieser Ausführungsform wird beispielsweise der Reifendruck im ersten Betriebsmodus alle drei Sekunden erfasst (andere Zeitabstände sind ebenfalls möglich, z.B. alle fünf oder zehn Sekunden). Der Übergang in diesen Betriebsmodus kann beispielsweise in Abhängigkeit von den Daten des Bewegungssensors der Reifendruckkontrollvorrichtung erfolgen. Detektiert die Reifendruckkontrollvorrichtung mit ihrem Bewegungssensor, in diesem Beispiel mit einem Bewegungssensor in Gestalt eines Beschleunigungssensors, einen Stillstand der Einrichtung, wird in den Betriebsmodus 1 geschaltet. Es ist außerdem möglich, dass der Betriebsmodus 1 nach Ablauf einer vorgegebenen Zeitdauer in einen weiteren Betriebsmodus übergehen kann, der noch energiesparender ist. Wird beispielsweise das Fahrzeug für eine längere Zeitdauer abgestellt und es erfolgt keine Änderung der Beschleunigungswerte des Bewegungssensors und auch keine Änderung der Druckwerte, kann die Erfassungsfrequenz der Reifendrücke weiter reduziert werden. Dies ist jedoch nicht Gegenstand dieser Anmeldung und wird daher nicht weiter beschrieben. Im Rahmen der Anmeldung und der Erfindung geht es darum, aus dem energiesparenden Modus in einen energieintensiveren Modus mit höherer Messfrequenz und Übermittlung der Messdaten zu schalten und eine solche Umschaltung zu verhindern, wenn sie nicht unbedingt erforderlich ist.

Gemäß Schritt 20 wird zusammen mit dem Übergang in den Betriebsmodus oder unmittelbar davor oder danach eine Referenzwertfestsetzung vorgenommen. In diesem Ausführungsbeispiel werden zwei Referenzwerte in der Reifendruckkontrollvorrichtung gespeichert, die jeweils auf den zuletzt von der Reifendruckkontrollvorrichtung ausgesendeten Druckwert p_sent des Reifens festgesetzt werden. Die Referenzwerte Ref1 und Ref2 sind also in Schritt 20 identisch. Außerdem wird in Schritt 30 ein Timer t_1 gestartet, indem der Zeitwert t_1 auf null gesetzt wird. Der Timer läuft im Betriebsmodus 1 in einer üblichen Weise zur Zeitmessung ab.

Schritt 40 definiert den ersten Schritt in einem Messzyklus. In Schritt 40 wird ein aktuell gemessener Druckmesswert p_mess mit dem ersten Referenzwert Ref1 verglichen. Beträgt die absolute Abweichung mehr als ein erster Schwellwert sw_1, so zeigt dies an, dass eine rasche Druckänderung im Reifen vorliegt. In diesem Fall wird zu Schritt 100 gesprungen, welcher einem Betriebsmodus mit rascherer Messfolge und Übermittlung der Messdaten entspricht. Wird also beispielsweise in diesem Ausführungsbeispiel eine Befüllung der Reifen an einer Servicestation vorgenommen, würde in Schritt 40 erkannt, dass der Messwert von dem Referenzwert Ref1, der dem zuletzt ausgesendeten Druckmesswert entspricht, erheblich abweicht und es wird auf eine raschere Messfolge mit Druckdatenaussendung umgeschaltet. Der Betriebsmodus 2 entspricht also beispielsweise dem in den Fachkreisen bekannten Delta-P-Modus.

Der Schwellwert sw_1 ist so gewählt, dass geringe, jedoch signifikante Druckabweichungen zu einem Übergang in den Betriebsmodus 2 führen. In diesem Ausführungsbeispiel ist der Schwellwert sw_1 beispielsweise auf 100 mbar festgesetzt. Wenn von einer absoluten Abweichung gesprochen wird, ist damit gemeint, dass die Druckabweichung sowohl einen Druckanstieg als auch einen Druckabfall erfasst. In Schritt 40 wird also der absolute Betrag der Abweichung mit dem Schwellwert sw_1 verglichen.

In dem üblichen Fall, dass kein rascher oder erheblicher Druckabfall oder Druckanstieg vorliegt, also der Schwellwert sw_1 nicht überschritten wird, wird zu Schritt 50 gewechselt.

In Schritt 50 wird geprüft, ob der Timer t_1 eine Abklingdauer ak überschritten hat. Ist dies nicht der Fall, wird zurückgekehrt zu Schritt 40. In der Schleife zwischen den Schritten 40 und 50 können Verzögerungen berücksichtigt werden, um einen Zeitabstand der Messungen von Druckwerten vorzugeben. Beispielsweise kann vorgegeben werden, dass die Druckwerte alle drei, fünf oder zehn Sekunden erfasst werden. Dies ist jedoch für das grundsätzliche Prinzip der Erfindung nicht wesentlich.

Ist in Schritt 50 der Timer t_1 abgelaufen, so wird in Schritt 60 ein Vergleich des aktuellen Messwertes mit dem zweiten Referenzwert Ref2 vorgenommen und die absolute Abweichung gebildet. Diese absolute Abweichung wird mit dem Schwellwert sw_2 verglichen. Der Schwellwert sw_2 ist größer gewählt als der Schwellwert sw_1. Der Schwellwert sw_2 ist in diesem Beispiel auf 300 mbar gesetzt. Zu Beginn des Verfahrens, wenn die Referenz Ref1 und Ref2 noch gleich sind, wird der Vergleich in Schritt 60 angesichts der Tatsache, dass der Schwellwert sw_2 größer als der Schwellwert sw_1 ist, immer negativ ausfallen. Im weiteren Verfahren wird jedoch der Referenzwert Ref1 den Druckmesswerten p_mess nachgeführt, während der Referenzwert Ref2 auf dem anfänglich gesetzten Wert bleibt. Da dann die Referenzwerte auseinanderfallen kann der Vergleich in Schritt 60 durchaus als Abbruchkriterium und einen Wechsel zu Schritt 100 bewirken. Dazu weiter unten mehr.

Wird in Schritt 60 festgestellt, dass ein Übergang zu dem Betriebsmodus 2 nicht erforderlich ist, wird mit Schritt 70 fortgefahren. Dort wird der Referenzwert Ref1 auf den letzten gemessenen Druckwert p_mess gesetzt. In diesem Schritt wird also der Referenzwert ref1 den Messungen nachgeführt, während der Referenzwert ref2 unverändert gelassen wird. Dies bedeutet im Beispiel des Abkühlens eines Reifens nach einer Fahrt, dass nach Ablauf der Abklingdauer der aktuelle Vergleichswert Ref1 für den Vergleich mit der geringen Abweichung sw_1 dem durch Abkühlung sinkenden Druck nachgeführt wird. Die Abklingdauer kann in diesem Beispiel einen Wert von ak gleich fünf Minuten haben. Nachdem dieser Schritt 70 zum ersten Mal absolviert wurde, fallen also die Referenzwerte Ref1 und Ref2 auseinander.

Im nachfolgenden Schritt 80 wird der Timer t_1 wieder zurückgesetzt und außerdem wird in diesem Ausführungsbeispiel die Abklingdauer ak verdoppelt, wonach zu Schritt 40 zurückgekehrt wird. Die Abklingdauer beträgt nun statt der anfänglichen fünf Minuten zehn Minuten und diese Schleife zwischen den Schritten 40 und 80 kann mehrfach wiederholt werden. Beim zweiten Durchlauf fallen die Referenzwerte Ref1 und Ref2 auseinander, wodurch auch in Schritt 60 der Vergleich zu abweichenden Schrittergebnissen gegenüber Schritt 40 führen kann. Im Beispiel des abkühlenden Fahrzeugreifens wird der Druckwert den langsamen Veränderungen einer Reifendruckveränderung durch Abkühlen folgen. Ändert sich der Druck jedoch kurzfristig und über den Schwellwert sw_1 hinaus, so greift das Abbruchkriterium in Schritt 40 und es wird zu dem Betriebsmodus 2 in Schritt 100 gewechselt. Findet jedoch ein langsamerer, jedoch erheblicher Druckverlust statt, so wird dies in Schritt 60 detektiert, da der Referenzwert Ref2 gleich bleibt. Verliert also beispielweise ein Reifen im geparkten Zustand des Fahrzeuges Luft, so könnte dies grundsätzlich in einer langsamen Weise geschehen, welche durch die Anpassungen und Nachführungen des Druckmesswertes in Schritt 70 und den Vergleich in Schritt 40 nicht erfasst wird. Da jedoch Schritt 60 eine absolute Obergrenze für tolerable Druckänderungen vorgibt, in diesem Beispiel einen Wert von sw_2 gleich 350 mbar, würde ein Druckverlust oder allgemein eine Druckänderung über diesen Betrag zu einem Abbruch bei Schritt 60 führen und einen entsprechenden Wechsel in den Betriebsmodus 2 bei Schritt 100.

Das erfindungsgemäße Verfahren gemäß dieser Ausführungsform sorgt also dafür, dass ein zu häufiger Wechsel in den Betriebsmodus 2 verhindert wird, da die Vergleichswerte den Messwerten gemäß vorgegebenen Zeitgrenzwerten nachgeführt werden. Dennoch wird sichergestellt, dass im Falle einer ungewöhnlichen und/oder raschen Druckänderung ein Wechsel in den aktiveren und sendenden Betriebsmodus sichergestellt ist.

## Patentansprüche

1. Verfahren zur Ansteuerung eines Betriebsmodus einer Reifendruckkontrollvorrichtung, wobei die Reifendruckkontrollvorrichtung an einem Rad eines Fahrzeugs montiert ist, wobei die Reifendruckkontrollvorrichtung wenigstens eine Druckmesseinrichtung und eine Sendeeinrichtung zur Funk-Übermittlung von Druckmessdaten an eine Empfangseinrichtung einer Zentraleinheit am Fahrzeug und Speichermittel für Druckdaten und Vergleichsmittel für Vergleiche von Druckwerten sowie einen Bewegungssensor aufweist,
wobei die Reifendruckkontrollvorrichtung wenigstens zwei Betriebsmodi einnehmen kann,
wobei in einem ersten Betriebsmodus der Reifendruck wiederholt in ersten Zeitabständen gemessen wird,
wobei in einem zweiten Betriebsmodus der Reifendruck in zweiten Zeitabständen gemessen wird, wobei die zweiten Zeitabstände geringer sind als die ersten Zeitabstände und wobei Druckmessdaten im zweiten Betriebsmodus von der Reifendruckkontrollvorrichtung ausgesendet werden,
wobei aus dem ersten Betriebsmodus in den zweiten Betriebsmodus gewechselt wird, wenn ein gemessener Druck von einem gespeicherten ersten Referenzwert um mehr als einen ersten Schwellwert abweicht,
**dadurch gekennzeichnet,**
**dass** bei Eintritt in den ersten Betriebsmodus aus zuvor abgesendeten Druckwerten ein erster Referenzwert berechnet und in den Speichermitteln der Reifendruckkontrollvorrichtung gespeichert wird,
**dass** ein Timer in der Reifendruckkontrollvorrichtung gestartet wird, der ein Zeitintervall bis zu einer ersten vorgegebenen Abklingdauer überwacht,
**dass** nach Ablauf der vorgegebenen ersten Abklingdauer der zuletzt gemessene Druckwert als erster Referenzwert gespeichert wird.

2. Verfahren nach Anspruch 1, wobei als erster Referenzwert bei Eintritt in den ersten Betriebsmodus der zuletzt abgesendete Druckwert gespeichert wird.

3. Verfahren nach Anspruch 1 oder 2, wobei in dem ersten Betriebsmodus keine Druckmessdaten von der Reifendruckkontrollvorrichtung ausgesendet werden.

4. Verfahren nach einem der vorangehenden Ansprüche, wobei in der Reifendruckkontrollvorrichtung ein zweiter Referenzwert gespeichert wird und wobei in den zweiten Betriebsmodus gewechselt wird, wenn ein gemessener Druck von dem zweiten Referenzwert um mehr als einen zweiten Schwellwert abweicht.

5. Verfahren nach Anspruch 4, wobei bei Eintritt in den ersten Betriebsmodus der zuletzt abgesendete Druckwert als zweiter Referenzwert in den Speichermitteln der Reifendruckkontrollvorrichtung gespeichert wird.

6. Verfahren nach einem der Ansprüche 4 oder 5, wobei der zweite Schwellwert größer ist als der erste Schwellwert.

7. Verfahren nach einem der vorangehenden Ansprüche, wobei der Timer nach Ablauf der ersten Abklingdauer erneut gestartet wird.

8. Verfahren nach einem der vorangehenden Ansprüche, wobei die erste Abklingdauer wenigstens eine Minute, vorzugsweise wenigstens fünf Minuten beträgt.

9. Verfahren nach einem der vorangehenden Ansprüche, wobei der erste Schwellwert wenigstens 50mbar, vorzugsweise wenigstens 100 mbar beträgt.

10. Verfahren nach einem der vorangehenden Ansprüche, wobei der zweite Schwellwert wenigstens 200 mbar, vorzugsweise wenigstens 350 mbar beträgt.

11. Verfahren nach einem der vorangehenden Ansprüche, wobei in Abhängigkeit von den Signalen des Bewegungssensors in den ersten Betriebsmodus gewechselt wird,

## Claims

1. A method for controlling operating modes of a tire pressure monitoring system, wherein the tire pressure monitoring system is mounted to a wheel of a vehicle, wherein the tire pressure monitoring system has at least one pressure measurement device, a sending device for the radio transmission of pressure measurement data to a receiving device of a central control unit of the vehicle, storage means for pressure data, comparison means for comparing pressure values, and a motion sensor,
wherein the tire pressure monitoring system can assume at least two operating modes,
wherein the tire pressure is measured repeatedly in first time intervals in a first operating mode,
wherein the tire pressure is measured in second time intervals in a second operating mode, wherein the second time intervals are shorter than the first time intervals, and wherein pressure measurement data are sent out by the tire pressure monitoring system in the second operating mode,
wherein the system switches from the first operating mode to the second operating mode when a measured value deviates from a stored first reference value by more than a first threshold value,
**characterized**
**in that** a first reference value is calculated from previously sent pressure values upon entry into the first operating mode, said first reference value then being stored in the storage means of the tire pressure monitoring system,
**in that** a timer in the tire pressure monitoring system is started, said timer monitoring a time interval up to a first defined decay time,
and **in that**, upon expiration of the first defined decay time, the most recently measured pressure value is stored as a first reference value.

2. The method according to claim 1, wherein, upon entry into the first operating mode, the most recently sent pressure value is stored as a first reference value.

3. The method according to claim 1 or 2, wherein no pressure measurement data are sent by the tire pressure monitoring system in the first operating mode.

4. The method according to any one of the preceding claims, wherein a second reference value is stored in the tire pressure monitoring system and wherein the system switches to the second operating mode when a measured value deviates from the second reference value by more than a second threshold value.

5. The method according to claim 4, wherein, upon entry into the first operating mode, the most recently sent pressure value is stored as a second reference value in the storage means of the tire pressure monitoring system.

6. The method according to any one of claims 4 or 5, wherein the second reference value is greater than the first reference value.

7. The method according to any one of the preceding claims, wherein the timer is started anew after the expiration of the first decay time.

8. The method according to any one of the preceding claims, wherein the first decay time is at least one minute, preferably at least five minutes.

9. The method according to any one of the preceding claims, wherein the first threshold value is at least 50 mbar, preferably at least 100 mbar.

10. The method according to any one of the preceding claims, wherein the second threshold value is at least 200 mbar, preferably at least 350 mbar.

11. The method according to any one of the preceding claims, wherein the system switches to the first operating mode in dependence on the signals of the motion sensor.

## Revendications

1. Méthode de commande de modes opératoires d'un système de surveillance de pressions de pneumatiques, sachant que le système de surveillance de pressions de pneumatiques est monté sur une roue d'un véhicule, sachant que le système de surveillance de pressions de pneumatiques comporte au moins un dispositif de mesure de pression et un dispositif d'émission pour la radiotransmission de données de mesure de pression à un dispositif de réception d'une unité centrale sur le véhicule et un moyen de mémorisation pour les données de pression et des moyens de comparaison pour les comparaisons des valeurs de pressions ainsi qu'un capteur de mouvement,
sachant que le système de surveillance de pressions de pneumatiques peut adopter au moins deux modes opératoires,
sachant que dans le premier mode opératoire, la pression des pneumatiques est mesurée de façon répétée en premiers intervalles de temps,
sachant que dans le deuxième mode opératoire, la pression des pneumatiques est mesurée en deuxièmes intervalles de temps, sachant que les deuxièmes intervalles de temps sont plus faibles que les premiers intervalles de temps et
sachant que les données de mesures de pressions dans le deuxième mode opératoire sont envoyées par le système de surveillance de pressions de pneumatiques,
sachant que l'on passe du premier mode opératoire au deuxième mode opératoire, si une pression mesurée s'écarte d'une première valeur de référence mémorisée de plus d'une première valeur seuil,
**caractérisée**
**en ce qu'**à l'entrée dans le premier mode opératoire une première valeur de référence est calculée à partir des valeurs de pression préalablement envoyées et est mémorisée dans les moyens de mémorisation du système de surveillance de pressions de pneumatiques,
**en ce qu'**une minuterie est mise en marche dans le système de surveillance de pressions de pneumatiques, qui surveille un intervalle de temps jusqu'à une première durée d'atténuation prédéfinie,
**en ce qu'**après expiration de la première durée d'atténuation prédéfinie, la valeur de pression mesurée en dernier lieu est mémorisée en tant que première valeur de référence.

2. Méthode selon la revendication 1, sachant que la valeur de pression envoyée en dernier lieu est mémorisée en tant que première valeur de référence à l'entrée dans le premier mode opératoire.

3. Méthode selon la revendication 1 ou 2, sachant que dans le premier mode opératoire aucune donnée de mesure de pression n'est envoyée par le système de surveillance de pressions de pneumatiques.

4. Méthode selon l'une quelconque des revendications précédentes, sachant qu'une deuxième valeur de référence est mémorisée dans le système de surveillance de pressions de pneumatiques et sachant que l'on passe en deuxième mode opératoire, si une pression mesurée s'écarte de la deuxième valeur de référence de plus d'une deuxième valeur seuil.

5. Méthode selon la revendication 4, sachant que la valeur de pression envoyée en dernier lieu à l'entrée dans le premier mode opératoire est mémorisée en tant que deuxième valeur de référence dans les moyens de mémorisation du système de surveillance de pressions de pneumatiques

6. Méthode selon l'une quelconque des revendications 4 ou 5, sachant que la deuxième valeur seuil est plus grande que la première valeur seuil.

7. Méthode selon l'une quelconque des revendications précédentes, sachant que la minuterie est à nouveau remise en marche après expiration de la première durée d'atténuation.

8. Méthode selon l'une quelconque des revendications précédentes, sachant que la première durée d'atténuation est au moins d'une minute, de préférence au moins de cinq minutes.

9. Méthode selon l'une quelconque des revendications précédentes, sachant que la première valeur seuil est au moins de 50 mbar, de préférence au moins de 100 mbar.

10. Méthode selon l'une quelconque des revendications précédentes, sachant que la deuxième valeur seuil est au moins de 200 mbar, de préférence au moins de 350 mbar.

11. Méthode selon l'une quelconque des revendications précédentes, sachant qu'elle est changée dans le premier mode opératoire en fonction des signaux du capteur de mouvement.
